# EUROPEAN PATENT APPLICATION

(11) **EP 3 705 310 A1**
(43) Date of publication of application: **09.09.2020**
(21) Application number: 20155531.5
(22) Date of filing: 05.02.2020
(51) Int. Cl.: B60C 1/00, C08L 9/06

(54) **RUBBER COMPOSITION FOR TIRE, AND TIRE**

(30) Priority: 05.03.2019 JP 2019039537
(71) Applicant: SUMITOMO RUBBER INDUSTRIES, LTD., Chuo-ku Kobe-shi Hyogo 651-0072 (JP)
(72) Inventor: KENTARO, Nakamura, Kobe-shi, Hyogo 651-0072 (JP)
(74) Representative: TBK

(57) **Abstract**

Provided are a rubber composition for a tire, and a tire which have excellent wear resistance. The rubber composition for a tire contains a rubber component, a silica, a mercapto-based coupling agent, and N-phenyl-N-(trichloromethylsulfenyl)benzyl sulfenamide.

## Description

### BACKGROUND OF THE INVENTION

### Field of the Invention

The present invention relates to a rubber composition for a tire, and a tire.

### Description of the Background Art

From the viewpoints of safety and environmental issues, tire members such as treads have been required to have various performance characteristics such as wet grip performance during running on a wet road surface, wear resistance, and low fuel consumption performance. Examples of generally known methods for improving wear resistance include a method using a high-molecular-weight polymer or a small-particle-diameter filler (carbon black, silica, or the like), and a method in which a crosslink density is adjusted by, for example, reducing the crosslink density (increasing swell).

However, if a high-molecular-weight polymer or a small-particle-diameter filler is used, the viscosity of kneaded rubber increases, and thus a process for the kneaded rubber tends to become laborious. Meanwhile, if the crosslink density is reduced, a problem arises in that the hardness Hs of the rubber decreases and rolling resistance deteriorates, whereby it becomes difficult to attain compatibility with wear resistance. On the other hand, although International Publication WO 2013/125614 discloses a technology of blending a specific modified diene-based rubber and a specific silica so as to impart favorable tire physical properties, further enhancement has been required in improving wear resistance while maintaining other tire performance characteristics.

### SUMMARY OF THE INVENTION

The present invention has been made to solve the aforementioned problems, and an object of the present invention is to provide a rubber composition for a tire, and a tire which have excellent wear resistance.

The present invention is directed to a rubber composition for a tire, the rubber composition containing a rubber component, a silica, a mercapto-based coupling agent, and N-phenyl-N-(trichloromethylsulfenyl)benzyl sulfenamide.

An amount of a styrene-butadiene rubber contained in 100% by mass of the rubber component is preferably not less than 50% by mass.

The rubber composition preferably contains not less than 90 parts by mass of the silica per 100 parts by mass of the rubber component. The rubber composition preferably contains not less than 100 parts by mass of the silica per 100 parts by mass of the rubber component.

The present invention is directed also to a tire in which the rubber composition is used.

Since the present invention is directed to the rubber composition for a tire containing a rubber component, a silica, a mercapto-based coupling agent, and N-phenyl-N-(trichloromethylsulfenyl)benzyl sulfenamide, the present invention can provide a rubber composition for a tire, and a tire which have excellent wear resistance.

### DESCRIPTION OF THE PREFERRED EMBODIMENTS

### <Rubber Composition for Tire>

A rubber composition for a tire according to the present invention contains a rubber component, a silica, a mercapto-based coupling agent, and N-phenyl-N-(trichloromethylsulfenyl)benzyl sulfenamide. The rubber composition can improve wear resistance while maintaining other tire performance characteristics such as low fuel consumption performance and steering stability.

The reason why such an advantageous effect is obtained is not clear, but is inferred as follows.

N-phenyl-N-(trichloromethylsulfenyl)benzyl sulfenamide is a tertiary amine and interacts with the silica. In addition, a mercapto-based silane coupling agent used in combination with the silica exhibits a function of promoting dispersion of the silica in rubber. Owing to this function, N-phenyl-N-(trichloromethylsulfenyl)benzyl sulfenamide also comes to be dispersed in the rubber together with the silica. Furthermore, in a case where styrene-butadiene rubber or the like is used as the rubber component, since N-phenyl-N-(trichloromethylsulfenyl)benzyl sulfenamide has two aromatic rings, π-π interactions occur so as to form weak pseudo-crosslinks of the styrene-butadiene rubber or the like. It is inferred that the above-described mechanism allows improvement in the complex elastic modulus E* of vulcanized rubber and improvement in wear resistance.

### (Rubber Component)

Examples of the rubber component include diene-based rubbers such as isoprene-based rubbers, butadiene rubber (BR), styrene-butadiene rubber (SBR), styrene-isoprene-butadiene rubber (SIBR), acrylonitrile-butadiene rubber (NBR), chloroprene rubber (CR), isobutylene-isoprene rubber (IIR), and styrene-isoprene-butadiene copolymer rubber (SIBR). Examples of the isoprene-based rubbers include natural rubber (NR), isoprene rubber (IR), reformed NR, modified NR, and modified IR. Among these rubber components, SBR and BR are preferable, and SBR is particularly preferable. These rubber components may be used singly, or two or more of these rubber components may be used in combination.

The SBR is not particularly limited, and, for example, emulsion-polymerized styrene-butadiene rubber (E-SBR), solution-polymerized styrene-butadiene rubber (S-SBR), and the like can be used. These SBRs may be used singly, or two or more of these SBRs may be used in combination.

The amount of the SBR contained in 100% by mass of the rubber component is preferably not less than 50% by mass, more preferably not less than 60% by mass, and further preferably not less than 65% by mass. If the amount is not less than the lower limit, favorable wear resistance tends to be obtained. Although the upper limit for the amount of the SBR is not particularly limited, the amount is preferably not greater than 90% by mass and more preferably not greater than 80% by mass.

The styrene content of the SBR is preferably not less than 20% by mass and more preferably not less than 25% by mass. Meanwhile, the styrene content is preferably not greater than 50% by mass and more preferably not greater than 45% by mass. If the styrene content is within the above-described range, favorable wear resistance tends to be obtained. The styrene content of the SBR in the present invention is calculated by H¹-NMR measurement.

The vinyl content of the SBR (the vinyl content of the butadiene component of the SBR) is preferably not less than 20% by mol and more preferably not less than 35% by mol. The vinyl content is preferably not greater than 65% by mol and more preferably not greater than 60% by mol. If the vinyl content is within the above-described range, favorable wear resistance tends to be obtained.

The vinyl content (1,2-bond butadiene unit content) can be measured by infrared absorption spectrometry.

As the SBR, oil-extended SBR can be suitably used.

Oil-extended SBR is obtained by extending SBR with use of an extender oil. If the oil-extended SBR obtained by performing the extension in advance with an extender oil as described above is contained, the dispersibility of the silica can be improved.

Examples of the extender oil used for extending SBR include naphthenic extender oils, paraffinic extender oils, and aromatic extender oils. Examples of the method for the extension with oil include a method in which an extender oil is added to a polymer obtained after the end of polymerization, and the polymer is stripped of the solvent and dried by a conventionally known method. The amount of the extender oil to be used per 100 parts by mass of the SBR (rubber solid component) is preferably 5 to 50 parts by mass, more preferably, 10 to 40 parts by mass, and further preferably 15 to 35 parts by mass.

As the SBR, modified SBR can also be used in addition to unmodified SBR. The modified SBR only has to be an SBR having a functional group that interacts with a filler such as silica. Examples of such an SBR include: end-modified SBR obtained by modifying at least one end of an SBR with a compound (modifier) having the above-described functional group (end-modified SBR having the above-described functional group at an end thereof); main chain-modified SBR having the above-described functional group in the main chain thereof; main chain/end-modified SBR having the above-described functional group in the main chain and at an end thereof (for example, a main chain/end-modified SBR that has the above-described functional group in the main chain thereof and in which at least one end is modified with the above-described modifier); and end-modified SBR that is modified (coupled) with a multifunctional compound having two or more epoxy groups in the molecule thereof and to which a hydroxyl group or an epoxy group is introduced.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent. Among these functional groups, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), and an alkoxysilyl group (preferably, an alkoxysilyl group having 1 to 6 carbon atoms) are preferable.

As the modified SBR, an SBR modified with a compound (modifier) represented by the following formula is particularly suitable. 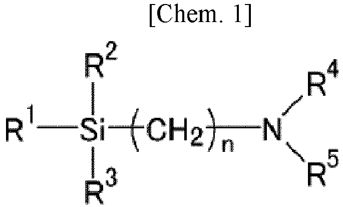 (in the formula, R¹, R², and R³ are the same as or different from one another and each represent an alkyl group, an alkoxy group, a silyloxy group, an acetal group, a carboxyl group (-COOH), a mercapto group (-SH), or a derivative of any of these groups, R⁴ and R⁵ are the same as or different from each other and each represent a hydrogen atom or an alkyl group, and R⁴ and R⁵ may be linked together to form a ring structure together with the nitrogen atom. "n" represents an integer.)

Among modified SBRs obtained by modification with the compound (modifier) represented by the above-described formula, an SBR obtained by modifying the polymerization ends (active ends) of a solution-polymerized styrene-butadiene rubber (S-SBR) with the compound represented by the above-described formula (a modified SBR described in Japanese Laid-Open Patent Publication No. 2010-111753, or the like), is suitably used.

As R¹, R², and R³, an alkoxy group (an alkoxy group preferably having 1 to 8 carbon atoms and more preferably having 1 to 4 carbon atoms) is suitable. As R⁴ and R⁵, an alkyl group (an alkyl group preferably having 1 to 3 carbon atoms) is suitable. "n" is preferably 1 to 5, more preferably 2 to 4, and further preferably 3. In a case where R⁴ and R⁵ are linked together to form a ring structure together with the nitrogen atom, a four to eight-membered ring is preferably formed. Examples of the alkoxy group include cycloalkoxy groups (such as a cyclohexyloxy group) and aryloxy groups (such as a phenoxy group and a benzyloxy group).

Specific examples of the above-described modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. Among these modifiers, 3-dimethylaminopropyl trimethoxysilane, 3-dimethylaminopropyl triethoxysilane, and 3-diethylaminopropyl trimethoxysilane are preferable. These modifiers may be used singly, or two or more of these modifiers may be used in combination.

As the modified SBR, modified SBRs obtained by modification with another compound (modifier) can also be suitably used. Examples of the other modifier include: polyglycidyl ethers of polyhydric alcohol, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;
sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl] sulfide;
N-substituted aziridine compounds such as ethyleneimine and propyleneimine; alkoxysilanes such as methyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover,
N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Modified SBRs modified with alkoxysilanes among these modifiers are preferable.

Modification with the above-described compounds (modifiers) can be carried out by a known method.

As the SBR, for example, SBRs manufactured by and available from Sumitomo Chemical Co., Ltd., JSR Corporation, Asahi Kasei Corporation, Zeon Corporation, etc., can be used.

The BR is not particularly limited, and a BR having a high cis content, a BR that contains syndiotactic polybutadiene crystal, a rare earth-based BR, and the like can be used. As commercially available products, for example, products of Ube Industries, Ltd., JSR Corporation, Asahi Kasei Corporation, Zeon Corporation, etc., can be used. The BR may be either of unmodified BR and modified BR. Examples of the modified BR include modified BRs in which the aforementioned functional group is introduced. These BRs may be used singly, or two or more of these BRs may be used in combination. Among these BRs, a BR having a high cis content is suitable.

The cis content (the amount of cis-1,4-bonds) of the BR having a high cis content is preferably not less than 80% by mass, more preferably not less than 90% by mass, and further preferably not less than 95% by mass, from the viewpoints of wear resistance and the like.

In a case where the rubber composition contains the BR, the amount of the BR contained in 100% by mass of the rubber component is preferably not less than 5% by mass, more preferably not less than 10% by mass, and further preferably not less than 15% by mass, from the viewpoint of wear resistance. Although the upper limit for the amount is not particularly limited, the amount is preferably not greater than 50% by mass and more preferably not greater than 40% by mass.

### (Silica)

Examples of the silica include dry-process silica (anhydrous silica) and wet-process silica (hydrous silica). Among these silicas, wet-process silica is preferable because of a higher silanol group content thereof. These silicas may be used singly, or two or more of these silicas may be used in combination.

The amount of the silica contained per 100 parts by mass of the rubber component is preferably not less than 70 parts by mass, more preferably not less than 90 parts by mass, and further preferably not less than 100 parts by mass. If the amount is not less than the lower limit, favorable wear resistance tends to be obtained. Although the upper limit for the amount is not particularly limited, the amount is preferably not greater than 300 parts by mass, more preferably not greater than 200 parts by mass, and further preferably not greater than 160 parts by mass. If the amount is not greater than the upper limit, favorable dispersibility tends to be obtained.

The nitrogen adsorption specific surface area (N₂SA) of the silica is preferably not less than 80 m²/g, more preferably not less than 120 m²/g, and further preferably not less than 150 m²/g. If the N₂SA is not less than the lower limit, favorable wear resistance tends to be obtained. Meanwhile, the N₂SA of the silica is preferably not greater than 250 m²/g, more preferably not greater than 220 m²/g, and further preferably not greater than 200 m²/g. If the N₂SA is not greater than the upper limit, favorable dispersibility tends to be obtained.

The N₂SA of the silica is a value measured by the BET method according to ASTM D3037-93.

As the silica, for example, products of Degussa, Rhodia, Tosoh Silica Corporation, Solvay Japan, Ltd., Tokuyama Corporation, etc., can be used.

### (Mercapto-Based Silane Coupling Agent)

Examples of the mercapto-based silane coupling agent include silane coupling agents having a mercapto group, and silane coupling agents in which a mercapto group is protected. These mercapto-based silane coupling agents may be used singly, or two or more of these mercapto-based silane coupling agents may be used in combination. When the silica is blended, if the mercapto-based silane coupling agent and N-phenyl-N-(trichloromethylsulfenyl)benzyl sulfenamide described later are used in combination, wear resistance is synergistically improved.

The amount of the mercapto-based silane coupling agent contained per 100 parts by mass of the silica is preferably not less than 2 parts by mass, more preferably not less than 4 parts by mass, and further preferably not less than 6 parts by mass. If the amount is not less than the lower limit, favorable wear resistance and the like tend to be obtained. Meanwhile, the above-described amount is preferably not greater than 20 parts by mass, more preferably not greater than 15 parts by mass, and further preferably not greater than 10 parts by mass. If the amount is not greater than the upper limit, an effect corresponding to the blending amount tends to be obtained.

As the mercapto-based silane coupling agent, (i) a silane coupling agent represented by the following formula (2-1), (ii) a silane coupling agent containing a bond unit A represented by the following formula (2-2) and a bond unit B represented by the following formula (2-3), and the like can be suitably used. 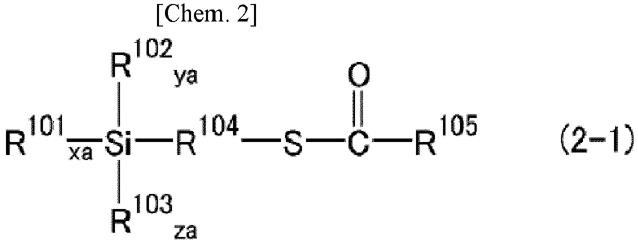 (In formula (2-1), R¹⁰¹ represents a monovalent group selected from among -Cl, -Br, -OR¹⁰⁶,-O(O=)CR¹⁰⁶, -ON=CR¹⁰⁶R¹⁰⁷, -ON=CR¹⁰⁶R¹⁰⁷, -NR¹⁰⁶R¹⁰⁷, and-(OSiR¹⁰⁶R¹⁰⁷)ₕ(OSiR¹⁰⁶R¹⁰⁷R¹⁰⁸)(R¹⁰⁶, R¹⁰⁷, and R¹⁰⁸ may be the same as or different from one another and each represent a hydrogen atom or a monovalent hydrocarbon group having 1 to 18 carbon atoms, an average value of "h" is 1 to 4), R¹⁰² is identical to R¹⁰¹ or represent a hydrogen atom or a monovalent hydrocarbon group having 1 to 18 carbon atoms, R¹⁰³ represents an -[O (R¹⁰⁹O)ⱼ]-group (R¹⁰⁹ represents an alkylene group having 1 to 18 carbon atoms, and "j" represents an integer from 1 to 4), R¹⁰⁴ represents a divalent hydrocarbon group having 1 to 18 carbon atoms, R¹⁰⁵ represents a monovalent hydrocarbon group having 1 to 18 carbon atoms, and "xa", "ya", and "za" represent numerals that satisfy the relationships of xa+ya+2za=3, 0≤xa≤3, 0≤ya≤2, and 0≤za≤1.) 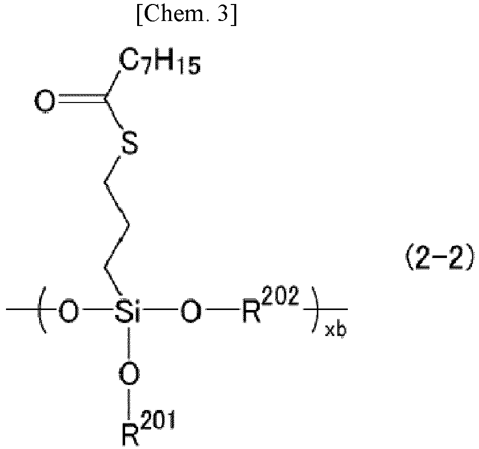 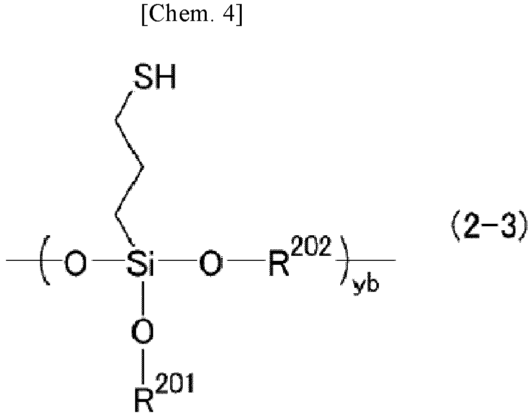 (in formulae (2-2) and (2-3), "xb" represents an integer not less than 0, "yb" represents an integer not less than 1, R²⁰¹ represents hydrogen, a halogen, a branched or unbranched alkyl group having 1 to 30 carbon atoms, a branched or unbranched alkenyl group having 2 to 30 carbon atoms, a branched or unbranched alkynyl group having 2 to 30 carbon atoms, or a group obtained by substituting a hydrogen atom at the end of the alkyl group with a hydroxyl group or a carboxyl group. R²⁰² represents a branched or unbranched alkylene group having 1 to 30 carbon atoms, a branched or unbranched alkenylene group having 2 to 30 carbon atoms, or a branched or unbranched alkynylene group having 2 to 30 carbon atoms. R²⁰¹ and R²⁰² may form a ring structure.)

Specific examples of R¹⁰², R¹⁰⁵, R¹⁰⁶, R¹⁰⁷, and R¹⁰⁸ in the above-described formula (2-1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of the linear alkylene group represented by R¹⁰⁹ in the above-described formula (2-1) include a methylene group, an ethylene group, an n-propylene group, an n-butylene group, and a hexylene group. Examples of the branched alkylene group represented by R¹⁰⁹ include an isopropylene group, an isobutylene group, and a 2-methylpropylene group.

Specific examples of the silane coupling agent represented by the above-described formula (2-1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among these silane coupling agents, 3-octanoylthiopropyltriethoxysilane (NXT manufactured by Momentive) is particularly preferable. The above-described silane coupling agents may be used singly, or two or more of the above-described silane coupling agents may be used in combination.

A silane coupling agent containing the bond unit A represented by formula (2-2) and the bond unit B represented by formula (2-3) allows suppression of increase in the viscosity during processing as compared to a polysulfide silane such as bis-(3-triethoxysilylpropyl)tetrasulfide. This is considered to be because the sulfide moiety of the bond unit A has a C-S-C bond and thus is thermally more stable than tetrasulfide and disulfide, whereby the Mooney viscosity less increases.

In addition, the scorch time is inhibited from being shortened as compared to a mercapto silane such as 3-mercaptopropyltrimethoxysilane. This is considered to be because, although the bond unit A has a mercapto silane structure, the -C₇H₁₅ moiety of the bond unit A covers the -SH group of the bond unit B, and thus a reaction with a polymer is less likely to occur and scorch is less likely to occur.

In the silane coupling agent having the above-described structure, the amount of the bond unit A is preferably not less than 30% by mol and more preferably not less than 50% by mol, and meanwhile, the amount is preferably not greater than 99% by mol and more preferably not greater than 90% by mol. From the viewpoint of the reactivity with the silica, the amount of the bond unit B is preferably not less than 1% by mol, more preferably not less than 5% by mol, and further preferably not less than 10% by mol, and meanwhile, the amount is preferably not greater than 70% by mol, more preferably not greater than 65% by mol, and further preferably not greater than 55% by mol. The total amount of the bond units A and B is preferably not less than 95% by mol, more preferably not less than 98% by mol, and particularly preferably 100% by mol.

The amount of the bond unit A, B refers to an amount that is applicable also when the bond unit A, B is located at an end of the silane coupling agent. The forms of the bond units A and B located at ends of the silane coupling agent are not particularly limited as long as units are formed so as to correspond to formulae (2-2) and (2-3) representing the bond units A and B.

Examples of the halogen represented by R²⁰¹ include chlorine, bromine, and fluorine.

Examples of the branched or unbranched alkyl group having 1 to 30 carbon atoms represented by R²⁰¹ include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group. The number of the carbon atoms of the alkyl group is preferably 1 to 12.

Examples of the branched or unbranched alkenyl group having 2 to 30 carbon atoms represented by R²⁰¹ include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, and a 1-octenyl group. The number of the carbon atoms of the alkenyl group is preferably 2 to 12.

Examples of the branched or unbranched alkynyl group having 2 to 30 carbon atoms represented by R²⁰¹ include an ethynyl group, a propynyl group, a butynyl group, a pentynyl group, a hexynyl group, a heptynyl group, an octynyl group, a nonynyl group, a decynyl group, an undecynyl group, and a dodecynyl group. The number of the carbon atoms of the alkynyl group is preferably 2 to 12.

Examples of the branched or unbranched alkylene group having 1 to 30 carbon atoms represented by R²⁰² include an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group. The number of the carbon atoms of the alkylene group is preferably 1 to 12.

Examples of the branched or unbranched alkenylene group having 2 to 30 carbon atoms represented by R²⁰² include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group. The number of the carbon atoms of the alkenylene group is preferably 2 to 12.

Examples of the branched or unbranched alkynylene group having 2 to 30 carbon atoms represented by R²⁰² include an ethynylene group, a propynylene group, a butynylene group, a pentynylene group, a hexynylene group, a heptynylene group, an octynylene group, a nonynylene group, a decynylene group, an undecynylene group, and a dodecynylene group. The number of the carbon atoms of the alkynylene group is preferably 2 to 12.

In the silane coupling agent containing the bond unit A represented by formula (2-2) and the bond unit B represented by formula (2-3), the total number of repetitions (xb+yb) of the number of repetitions (xb) of the bond unit A and the number of repetitions (yb) of the bond unit B is preferably within the range of 3 to 300. If the total number is within this range, the mercapto silane of the bond unit B is covered by -C₇H₁₅ of the bond unit A, and thus the scorch time can be inhibited from being shortened, and favorable reactivity with the silica and the rubber component can be ensured.

As the silane coupling agent containing the bond unit A represented by formula (2-2) and the bond unit B represented by formula (2-3), for example, NXT-Z30, NXT-Z45, and NXT-Z60 manufactured by Momentive, etc., can be used. These silane coupling agents may be used singly, or two or more of these silane coupling agents may be used in combination.

As the mercapto-based silane coupling agent, (iii) a silane coupling agent represented by the following formula (2-4) can also be suitably used.

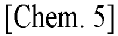

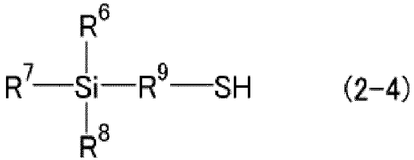

R⁶ in the above-described formula (2-4) represents a group represented by -O-(R¹⁰-O)ₘ-R¹¹ (R¹⁰s, the number of which is m, are the same as or different from one another and each represent a branched or unbranched divalent hydrocarbon group having 1 to 30 carbon atoms. R¹¹ represents a branched or unbranched alkyl group having 1 to 30 carbon atoms, a branched or unbranched alkenyl group having 2 to 30 carbon atoms, an aryl group having 6 to 30 carbon atoms, or an aralkyl group having 7 to 30 carbon atoms. "m" represents an integer from 1 to 30).

The above-described R¹⁰s are the same as or different from one another and each represent a branched or unbranched divalent hydrocarbon group having 1 to 30 carbon atoms (preferably 1 to 6 carbon atoms and more preferably 1 to 3 carbon atoms).

Examples of the hydrocarbon group include a branched or unbranched alkylene group having 1 to 30 carbon atoms, a branched or unbranched alkenylene group having 2 to 30 carbon atoms, a branched or unbranched alkynylene group having 2 to 30 carbon atoms, and an arylene group having 6 to 30 carbon atoms. Among these hydrocarbon groups, the above-described alkylene group is preferable for the reason that the alkylene group allows facilitation of bonding to the silica and is advantageous in low heat generation properties (low fuel consumption performance).

Examples of the branched or unbranched alkylene group having 1 to 30 carbon atoms (preferably 1 to 6 carbon atoms and more preferably 1 to 3 carbon atoms) represented by R¹⁰ include a methylene group, an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group.

Examples of the branched or unbranched alkenylene group having 2 to 30 carbon atoms (preferably 2 to 10 carbon atoms and more preferably 2 to 6 carbon atoms) represented by R¹⁰ include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group.

Examples of the branched or unbranched alkynylene group having 2 to 30 carbon atoms (preferably 2 to 10 carbon atoms and more preferably 2 to 6 carbon atoms) represented by R¹⁰ include an ethynylene group, a propynylene group, a butynylene group, a pentynylene group, a hexynylene group, a heptynylene group, an octynylene group, a nonynylene group, a decynylene group, an undecynylene group, and a dodecynylene group.

Examples of the arylene group having 6 to 30 carbon atoms (preferably 6 to 12 carbon atoms) represented by R¹⁰ include a phenylene group, a tolylene group, a xylylene group, and a naphthylene group.

The above-described "m" represents an integer from 1 to 30 (preferably from 2 to 15, more preferably from 3 to 7, and further preferably from 5 to 6). If "m" is 0, a disadvantage is posed in bonding to silica. Also if "m" is not less than 31, the reactivity with the silica tends to decrease, and the low heat generation properties (low fuel consumption performance) may deteriorate.

R¹¹ represents a branched or unbranched alkyl group having 1 to 30 carbon atoms, a branched or unbranched alkenyl group having 2 to 30 carbon atoms, an aryl group having 6 to 30 carbon atoms, or an aralkyl group having 7 to 30 carbon atoms. Among these groups, a branched or unbranched alkyl group having 1 to 30 carbon atoms is preferable for the reason that a high reactivity with the silica is obtained.

Examples of the branched or unbranched alkyl group having 1 to 30 carbon atoms (preferably 3 to 25 carbon atoms and more preferably 10 to 15 carbon atoms) represented by R¹¹ include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, a decyl group, an undecyl group, a dodecyl group, a tridecyl group, a tetradecyl group, a pentadecyl group, and an octadecyl group.

Examples of the branched or unbranched alkenyl group having 2 to 30 carbon atoms (preferably 3 to 20 carbon atoms and more preferably 10 to 15 carbon atoms) represented by R¹¹ include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, a 1-octenyl group, a decenyl group, an undecenyl group, a dodecenyl group, a tridecenyl group, a tetradecenyl group, a pentadecenyl group, and an octadecenyl group.

Examples of the aryl group having 6 to 30 carbon atoms (preferably 6 to 15 carbon atoms) represented by R¹¹ include a phenyl group, a tolyl group, a xylyl group, a naphthyl group, and a biphenyl group.

Examples of the aralkyl group having 7 to 30 carbon atoms (preferably 7 to 20 carbon atoms) represented by R¹¹ include a benzyl group and a phenethyl group.

Specific examples of R⁶ in the above-described formula (2-4) include -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, and -O-(C₂H₄-O)₇-C₁₃H₂₇. Among these groups, -O-(C₂H₄-O)₅-C₁₁H₂₃, -O-(C₂H₄-O)₅-C₁₃H₂₇, -O-(C₂H₄-O)₅-C₁₅H₃₁, and -O-(C₂H₄-O)₆-C₁₃H₂₇ are preferable.

R⁷ and R⁸ are the same as or different from each other and each represent the same group as that represented by R⁶ (that is, a group represented by -O-(R¹⁰-O)ₘ-R¹¹), a branched or unbranched alkyl group having 1 to 12 carbon atoms, or a group represented by -OR¹² (R¹² represents a hydrogen atom, a branched or unbranched alkyl group having 1 to 30 carbon atoms, a branched or unbranched alkenyl group having 2 to 30 carbon atoms, an aryl group having 6 to 30 carbon atoms, or an aralkyl group having 7 to 30 carbon atoms). Among these groups, the same group as that represented by R⁶ and a group represented by -O-R¹² (where R¹² is a branched or unbranched alkyl group having 1 to 30 carbon atoms) are preferable for the reason that a high reactivity with the silica is obtained.

Examples of the branched or unbranched alkyl group having 1 to 12 carbon atoms (preferably 1 to 8 carbon atoms and more preferably 1 to 5 carbon atoms) represented by each of R⁷ and R⁸ include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, and a nonyl group.

Examples of the branched or unbranched alkyl group having 1 to 30 carbon atoms (preferably 1 to 15 carbon atoms and more preferably 1 to 3 carbon atoms) represented by R¹² include the same group as the branched or unbranched alkyl group having 1 to 30 carbon atoms represented by the above-described R¹¹.

Examples of the branched or unbranched alkenyl group having 2 to 30 carbon atoms (preferably 2 to 20 carbon atoms and more preferably 2 to 10 carbon atoms) represented by R¹² include the same group as the branched or unbranched alkenyl group having 2 to 30 carbon atoms represented by the above-described R¹¹.

Examples of the aryl group having 6 to 30 carbon atoms (preferably 6 to 15 carbon atoms) represented by R¹² include the same group as the aryl group having 6 to 30 carbon atoms represented by the above-described R¹¹.

Examples of the aralkyl group having 7 to 30 carbon atoms (preferably 7 to 15 carbon atoms) represented by R¹² include the same group as the aralkyl group having 7 to 30 carbon atoms represented by the above-described R¹¹.

Specific examples of R⁷ and R⁸ in the above-described formula (2-4) include -O-(C₂H₄-O)₅-C₁₁H₂₃, -O-(C₂H₄-O)₅-C₁₂H₂₅, -O-(C₂H₄-O)₅-C₁₃H₂₇, -O-(C₂H₄-O)₅-C₁₄H₂₉, -O-(C₂H₄-O)₅-C₁₅H₃₁, -O-(C₂H₄-O)₃-C₁₃H₂₇, -O-(C₂H₄-O)₄-C₁₃H₂₇, -O-(C₂H₄-O)₆-C₁₃H₂₇, -O-(C₂H₄-O)₇-C₁₃H₂₇, C₂H₅-O-, CH₃-O-, and C₃H₇-O-. Among these groups, -O-(C₂H₄-O)₅-C₁₁H₂₃, -O-(C₂H₄-O)₅-C₁₃H₂₇, -O-(C₂H₄-O)₅-C₁₅H₃₁, -O-(C₂H₄-O)₆-C₁₃H₂₇, and C₂H₅-O- are preferable.

Examples of the branched or unbranched alkylene group having 1 to 30 carbon atoms (preferably 1 to 10 carbon atoms and more preferably 1 to 5 carbon atoms) represented by R⁹ include the same group as the branched or unbranched alkylene group having 1 to 30 carbon atoms represented by the above-described R¹⁰.

As the silane coupling agent represented by the above-described formula (2-4), for example, Si363 manufactured by Evonik Degussa GmbH, etc., can be used.

As commercially available products of the mercapto-based silane coupling agents, products of Degussa, Momentive, Shin-Etsu Silicones, Tokyo Chemical Industry Co., Ltd., AZmax, Dow Corning Toray Co., Ltd., etc., can be used.

### (N-Phenyl-N-(Trichloromethylsulfenyl)Benzyl Sulfenamide)

The rubber composition contains N-phenyl-N-(trichloromethylsulfenyl)benzyl sulfenamide represented by the following formula. If this material is blended, the wear resistance can be significantly improved while other tire physical properties are maintained. As commercially available products, Vulkalent E/C of LANXESS, etc., can be used.

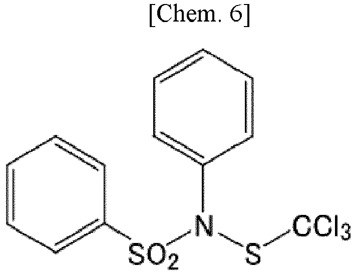

The amount of N-phenyl-N-(trichloromethylsulfenyl)benzyl sulfenamide contained per 100 parts by mass of the rubber component is preferably not less than 0.01 parts by mass, more preferably not less than 0.05 parts by mass, and further preferably not less than 0.10 parts by mass. As for the upper limit for the amount, the amount is preferably not greater than 5.00 parts by mass, more preferably not greater than 3.00 parts by mass, and further preferably not greater than 2.00 parts by mass. If the amount is within the above-described range, the wear resistance tends to be able to be improved while other tire physical properties are maintained.

### (Zinc Dithiophosphate)

The rubber composition preferably contains a zinc dithiophosphate represented by the following formula. Accordingly, the wear resistance and the like are improved. 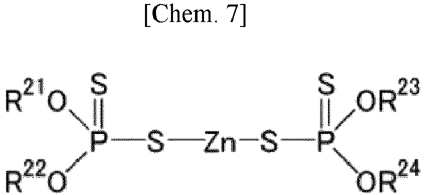 (In the formula, R²¹ to R²⁴ each independently represent a straight chain or branched chain alkyl group having 1 to 18 carbon atoms or a cycloalkyl group having 5 to 12 carbon atoms.)

In the aforementioned formula, examples of the straight chain or branched chain alkyl group represented by each of R²¹ to R²⁴ include a methyl group, an ethyl group, an n-propyl group, an iso-propyl group, an n-butyl group, a 4-methylpentyl group, a 2-ethylhexyl group, an octyl group, and an octadecyl group, and examples of the cycloalkyl group include a cyclopentyl group, a cyclohexyl group, and a cyclooctyl group. Among these groups, R²¹ to R²⁴ are each preferably a straight chain or branched chain alkyl group having 2 to 8 carbon atoms, more preferably an n-butyl group, an n-propyl group, an iso-propyl group, or an n-octyl group, and further preferably an n-butyl group, since dispersion in the rubber composition is facilitated and production becomes easy.

In a case where the above-described zinc dithiophosphate is contained, the amount of the above-described zinc dithiophosphate (the amount of an active ingredient) contained per 100 parts by mass of the rubber component is preferably not less than 0.1 parts by mass, more preferably not less than 0.3 parts by mass, and further preferably not less than 0.5 parts by mass, and meanwhile, the amount is preferably not greater than 10.0 parts by mass, more preferably not greater than 5.0 parts by mass, and further preferably not greater than 3.0 parts by mass. If the amount is within the above-described range, the aforementioned advantageous effect tends to be sufficiently obtained.

The above-described zinc dithiophosphates may be used singly, or two or more of the zinc dithiophosphates may be used in combination. As the zinc dithiophosphate, for example, products of Rhein Chemie Corporation, etc., can be used.

### (Carbon Black)

The rubber composition preferably contains a carbon black from the viewpoints of wear resistance and the like. Examples of the carbon black include GPF, FEF, HAF, ISAF, and SAF, but the carbon black is not particularly limited. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used.

The amount of the carbon black contained per 100 parts by mass of the rubber component is preferably not less than 3 parts by mass and more preferably not less than 5 parts by mass. If the amount is not less than the lower limit, an effect expected from blending of the carbon black tends to be obtained. Meanwhile, the amount of the carbon black is preferably not greater than 50 parts by mass, more preferably not greater than 30 parts by mass, and further preferably not greater than 20 parts by mass. If the amount is not greater than the upper limit, favorable dispersibility tends to be obtained.

The nitrogen adsorption specific surface area (N₂SA) of the carbon black is preferably not less than 100 m²/g, more preferably not less than 115 m²/g, and further preferably not less than 125 m²/g, and meanwhile, the N₂SA is preferably not greater than 250 m²/g, more preferably not greater than 180 m²/g, and further preferably not greater than 160 m²/g. If the N₂SA is within the above-described range, favorable wear resistance tends to be obtained.

The nitrogen adsorption specific surface area of the carbon black is obtained according to JIS K 6217-2: 2001.

The oil (DBP) absorption amount of the carbon black is preferably not less than 50 ml/100 g, more preferably not less than 100 ml/100 g, and further preferably not less than 115 ml/100 g, and meanwhile, the DBP absorption amount is preferably not greater than 250 ml/100 g, more preferably not greater than 200 ml/100 g, and further preferably not greater than 135 ml/100 g. If the DBP absorption amount is within the above-described range, favorable wear resistance tends to be obtained.

The DBP absorption amount of the carbon black is measured according to JIS K 6217-4: 2001.

### (Liquid Plasticizer)

The rubber composition preferably contains a liquid plasticizer from the viewpoint of various tire physical properties.

The liquid plasticizer is not particularly limited as long as the plasticizer is in liquid form at normal temperature (25°C). Examples of the liquid plasticizer include oils, liquid diene-based polymers, and liquid resins. Among these liquid plasticizers, oils are preferable from the viewpoints of processability and the like. These liquid plasticizers may be used singly, or two or more of these liquid plasticizers may be used in combination.

The amount (total amount) of the liquid plasticizer(s) contained per 100 parts by mass of the rubber component is preferably not less than 10 parts by mass, more preferably not less than 20 parts by mass, and further preferably not less than 30 parts by mass. If the amount is not less than the lower limit, favorable processability tends to be obtained. Meanwhile, the amount is preferably not greater than 100 parts by mass, more preferably not greater than 70 parts by mass, and further preferably not greater than 50 parts by mass. If the amount is not greater than the upper limit, favorable wear resistance tends to be obtained. The amount of the liquid plasticizer includes the amount of oil (extender oil) contained in rubber (oil-extended rubber).

As the oils, conventionally known oils can be used, and examples thereof not only include the aforementioned extender oil but also: process oils such as paraffinic process oil, aromatic process oil, and naphthenic process oil; low-PCA (polycyclic aromatic) process oils such as TDAE and MES; vegetable fats and oils; and mixtures thereof. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. Among these oils, process oils are preferable. As commercially available products of the oils, for example, products of Idemitsu Kosan Co., Ltd., Sankyo Yuka Kogyo K.K., Japan Energy Corporation, Olisoy, H&R, Hokoku Corporation, Showa Shell Sekiyu K.K., FUJI KOSAN COMPANY, LTD., etc., can be used.

The polystyrene-equivalent weight-average molecular weight (Mw) of the liquid diene-based polymer measured by gel permeation chromatography (GPC) is preferably 1.0×10³ to 2.0×10⁵ and more preferably 3.0×10³ to 1.5×10⁴.

In the present specification, the Mw of the liquid diene-based polymer is a polystyrene-equivalent value measured by gel permeation chromatography (GPC).

Examples of the liquid diene-based polymers include liquid styrene-butadiene copolymers (liquid SBRs), liquid butadiene polymers (liquid BRs), liquid isoprene polymers (liquid IRs), and liquid styrene-isoprene copolymers (liquid SIRs).

The liquid resins are not particularly limited, and examples thereof include liquid aromatic vinyl polymers, coumarone-indene resins, indene resins, terpene resins, rosin resins, and hydrogenated products thereof.

Examples of the liquid aromatic vinyl polymers include resins obtained by polymerizing α-methylstyrene and/or styrene. Specific examples of the resins include liquid resins such as homopolymers of styrene, homopolymers of α-methylstyrene, and copolymers of α-methylstyrene and styrene.

The liquid coumarone-indene resins are each a resin that contains coumarone and indene as main monomer components that form the backbone (main chain) of the resin. Here, examples of monomer components that may be contained in the backbone, besides coumarone and indene, include styrene, α-methylstyrene, methylindene, and vinyltoluene.

The liquid indene resins are each a liquid resin that contains indene as a main monomer component that forms the backbone (main chain) of the resin.

The liquid terpene resins are: resins obtained by polymerizing a terpene compound such as α-pinene, β-pinene, camphene, and dipentene; and liquid terpene-based resins (terpene-phenol resins, aromatic modified terpene resins, and the like) typified by terpene phenol that is a resin obtained by using a terpene compound and a phenolic compound as raw materials.

Examples of the liquid rosin resins include liquid rosin-based resins typified by natural rosin, polymerized rosin, modified rosin, ester compounds of these rosins, and hydrogenated products of these rosins.

As commercially available products of the liquid diene-based polymers and the liquid resins, for example, products of Cray Valley, KURARAY CO., LTD., etc., can be used.

### (Resin)

The rubber composition may contain a resin (solid resin: a resin in solid form at normal temperature (25°C)).

Examples of the resin (solid resin) include aromatic vinyl polymers, coumarone-indene resins, indene resins, rosin resins, terpene-based resins, and acrylic resins. As commercially available products, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., JXTG Nippon Oil & Energy Corporation, Arakawa Chemical Industries, Ltd., Taoka Chemical Co., Ltd., TOAGOSEI CO., LTD., etc., can be used. These solid resins may be used singly, or two or more of these solid resins may be used in combination. Among these solid resins, aromatic vinyl polymers, coumarone-indene resins, terpene-based resins, and rosin resins are preferable, and coumarone-indene resins are more preferable.

The amount of resin (solid resin) contained per 100 parts by mass of the rubber component is preferably not less than 3 parts by mass and more preferably not less than 5 parts by mass. Meanwhile, the amount is preferably not greater than 30 parts by mass, more preferably not greater than 20 parts by mass, and further preferably not greater than 15 parts by mass. If the amount is within the above-described range, favorable wear resistance and the like tend to be obtained.

The softening point of the resin (solid resin) is preferably not less than 30°C, more preferably not less than 60°C, and further preferably not less than 80°C. Meanwhile, the above-described softening point is preferably not greater than 200°C and more preferably not greater than 160°C. If the softening point is within the above-described range, favorable wear resistance and the like tend to be obtained. The softening point of the resin is a softening point that is measured with a ring and ball softening point measuring device according to JIS K 6220-1: 2001, and is a temperature at which a ball has descended.

### (Other Components)

The rubber composition may contain a wax.

The wax is not particularly limited, and examples thereof include: petroleum waxes such as paraffin wax and microcrystalline wax; natural waxes such as vegetable wax and animal wax; and synthesized waxes such as polymers of ethylene, propylene, and the like. These waxes may be used singly, or two or more of these waxes may be used in combination. Among these waxes, petroleum waxes are preferable, and paraffin wax is more preferable.

As the wax, for example, products of OUCHI SHINKO CHEMICAL INDUSTRIAL CO., LTD., NIPPON SEIRO CO., LTD., Seiko Chemical Co., Ltd., etc., can be used.

In a case where the wax is contained, the amount of the wax contained per 100 parts by mass of the rubber component is preferably not less than 0.3 parts by mass and more preferably not less than 0.5 parts by mass, and meanwhile, the amount is preferably not greater than 20 parts by mass and more preferably not greater than 10 parts by mass.

The rubber composition may contain an anti-aging agent.

Examples of the anti-aging agent include: naphthylamine-based anti-aging agents such as phenyl-α-naphthylamine; diphenylamine-based anti-aging agents such as octylated diphenylamine and 4,4'-bis(α,α'-dimethylbenzyl)diphenylamine; p-phenylenediamine-based anti-aging agents such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agents such as polymers of 2,2,4-trimethyl-1,2-dihydroquinoline; monophenol-based anti-aging agents such as 2,6-di-t-butyl-4-methylphenol and styrenated phenol; and bis-, tris-, and poly-phenol-based anti-aging agents such as tetrakis-[methylene-3-(3',5'-di-t-butyl-4'-hydroxyphenyl)propionate]methane. As commercially available products, products of Seiko Chemical Co., Ltd., Sumitomo Chemical Co., Ltd., OUCHI SHINKO CHEMICAL INDUSTRIAL CO., LTD., Flexsys, etc., can be used. These anti-aging agents may be used singly, or two or more of these anti-aging agents may be used in combination. Among these anti-aging agents, p-phenylenediamine-based anti-aging agents and quinoline-based anti-aging agents are preferable.

In a case where the anti-aging agent is contained, the amount of the anti-aging agent contained per 100 parts by mass of the rubber component is preferably not less than 0.5 parts by mass and more preferably not less than 1 part by mass, and meanwhile, the amount is preferably not greater than 10 parts by mass and more preferably not greater than 5 parts by mass.

The rubber composition may contain a stearic acid.

As the stearic acid, conventionally known stearic acids can be used. For example, products of NOF Corporation, Kao Corporation, FUJIFILM Wako Pure Chemical Corporation, New Japan Chemical Co., Ltd., etc., can be used.

In a case where the stearic acid is contained, the amount of the stearic acid contained per 100 parts by mass of the rubber component is preferably not less than 0.5 parts by mass and more preferably not less than 1 part by mass, and meanwhile, the amount is preferably not greater than 10 parts by mass and more preferably not greater than 5 parts by mass.

The rubber composition may contain a fatty acid zinc. As the fatty acid zinc, a saturated fatty acid zinc having a plurality of (14 to 20) carbon atoms can be suitably used.

The amount of the fatty acid zinc contained per 100 parts by mass of the rubber component is preferably not less than 1.0 part by mass and more preferably not less than 1.5 parts by mass. Meanwhile, the amount is preferably not greater than 6.0 parts by mass and more preferably not greater than 4.0 parts by mass. If the amount is within the above-described range, favorable wear resistance tends to be obtained.

The rubber composition may contain a zinc oxide.

As the zinc oxide, conventionally known zinc oxides can be used. For example, products of MITSUI MINING & SMELTING CO., LTD., TOHO ZINC CO., LTD., HAKUSUI TECH., SEIDO CHEMICAL INDUSTRY CO., LTD., SAKAI CHEMICAL INDUSTRY CO., LTD., etc., can be used.

In a case where the zinc oxide is contained, the amount of the zinc oxide contained per 100 parts by mass of the rubber component is preferably not less than 0.5 parts by mass and more preferably not less than 1 part by mass, and meanwhile, the amount is preferably not greater than 10 parts by mass and more preferably not greater than 5 parts by mass.

The rubber composition preferably contains a sulfur.

Examples of the sulfur include powdery sulfur, precipitated sulfur, colloidal sulfur, insoluble sulfur, highly dispersible sulfur, and soluble sulfur, which are generally used in the rubber industry. These sulfurs may be used singly, or two or more of these sulfurs may be used in combination.

As the sulfur, for example, products of Tsurumi Chemical Industry Co., ltd., Karuizawa Sulfur Co, Ltd., SHIKOKU CHEMICALS CORPORATION, Flexsys, NIPPON KANRYU INDUSTRY CO., LTD., Hosoi Chemical Industry Co., Ltd., etc., can be used.

In a case where the sulfur is contained, the amount of the sulfur contained per 100 parts by mass of the rubber component is preferably not less than 0.1 parts by mass and more preferably not less than 0.5 parts by mass, and meanwhile, the amount is preferably not greater than 10 parts by mass, more preferably not greater than 5 parts by mass, and further preferably not greater than 3 parts by mass.

The rubber composition preferably contains a vulcanization accelerator.

Examples of the vulcanization accelerator include: thiazole-based vulcanization accelerators such as 2-mercaptobenzothiazole, di-2-benzothiazolyldisulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazolesulfenamide, N-t-butyl-2-benzothiazolylsulfenamide, N-oxyethylene-2-benzothiazolesulfenamide, N-oxyethylene-2-benzothiazolesulfenamide, and N,N'-diisopropyl-2-benzothiazolesulfenamide; and guanidine-based vulcanization accelerators such as diphenylguanidine, diorthotolylguanidine, and orthotolylbiguanidine. These vulcanization accelerators may be used singly, or two or more of these vulcanization accelerators may be used in combination. Among these vulcanization accelerators, sulfenamide-based vulcanization accelerators and guanidine-based vulcanization accelerators are preferable, and N-cyclohexyl-2-benzothiazolesulfenamide and TBzTD are more preferable.

In a case where the vulcanization accelerator is contained, the amount of the vulcanization accelerator contained per 100 parts by mass of the rubber component is preferably not less than 1.0 part by mass and more preferably not less than 2.0 parts by mass, and meanwhile, the amount is preferably not greater than 10.0 parts by mass and more preferably not greater than 7.0 parts by mass.

In the rubber composition, other blending ingredients (an organic crosslinking agent and the like) generally used in the tire industry may be further blended in addition to the aforementioned components. The amount of these blending ingredients contained per 100 parts by mass of the rubber component is preferably 0.1 to 200 parts by mass.

The rubber composition can be produced by, for example, a method in which the aforementioned components are kneaded with use of a rubber kneading device such as an open roll or a Banbury mixer, and then vulcanization is performed.

The kneading conditions are as follows: in a base kneading step of kneading the additives other than a vulcanizing agent and the vulcanization accelerator, the kneading temperature is normally 100 to 180°C and preferably 120 to 170°C; and, in a finish kneading step of kneading the vulcanizing agent and the vulcanization accelerator, the kneading temperature is normally not greater than 120°C and preferably 85 to 110°C. In addition, a composition obtained by kneading the vulcanizing agent and the vulcanization accelerator is normally subjected to vulcanization treatment such as press vulcanization. The vulcanization temperature is normally 140 to 190°C and preferably 150 to 185°C.

The rubber composition is suitably used for treads (cap treads) but may be used for other members, e.g., sidewalls, base treads, under treads, clinch apexes, bead apexes, breaker cushion rubbers, carcass cord covering rubbers, insulations, chafers, inner liners, and the like, and side reinforcing layers for run flat tires.

The tire according to the present invention is produced by an ordinary method using the above-described rubber composition.

Specifically, the above-described rubber composition is extruded in an unvulcanized state into the shape of each tire member such as a tread, and the tire member is formed, together with other tire members, on a tire forming machine by an ordinary method, to form an unvulcanized tire. The unvulcanized tire is heated and pressurized in a vulcanizing machine, thereby obtaining a tire.

Examples of the tire include pneumatic tires and airless (solid) tires. Among these tires, pneumatic tires are preferable. The tire can be used as a tire for passenger cars, a tire for large-sized passenger cars and large-sized SUVs, a heavy-duty tire for trucks, buses, and the like, a tire for light trucks, a tire for motorcycles, a racing tire (high-performance tire), and the like. In addition, the tire can be used as a tire for all seasons, a tire for summer, a studless tire (tire for winter), and the like.

### EXAMPLES

Although the present invention will be specifically described by means of examples, the present invention is not limited to these examples.

SBR: modified SBR (styrene content: 38% by mass, vinyl content: 39% by mol, Mw: 800 thousand, Tg: -25°C, an oil-extended rubber containing 25 parts by mass of oil per 100 parts by mass of the rubber solid component) synthesized according to Production Example 1 described below
BR: BR150B (cis content: 98% by mass) manufactured by Ube Industries, Ltd.
Carbon black: SHOBLACK N134 (N₂SA: 148 m²/g, DBP absorption amount: 123 ml/100 g) manufactured by Cabot Japan K.K.
Silica: ULTRASIL VN3 (manufactured by Evonik Industries Ag, N₂SA: 175 m²/g)
Zinc dithiophosphate: TP-50 (a mixture of a zinc dithiophosphate and a polymer, R¹ to R⁴ in the aforementioned formula: an n-butyl group, active ingredient: 50% by mass) manufactured by Rhein Chemie Corporation
Wax: OZOACE 0355 manufactured by NIPPON SEIRO CO., LTD.
Fatty acid zinc: EF44 manufactured by Struktol Company of America
Stearic acid: "Tsubaki" manufactured by NOF Corporation
Oil: VIVATEC400/500 (TDAE oil) manufactured by H&R
Mercapto-based silane coupling agent 1: NXT-Z45 (a copolymer of the bond unit A and the bond unit B (bond unit A: 55% by mol, bond unit B: 45% by mol)) manufactured by Momentive
Mercapto-based silane coupling agent 2: NXT (3-octanoylthiopropyltriethoxysilane) manufactured by Momentive
Mercapto-based silane coupling agent 3: Si363 (the silane coupling agent represented by the following formula (in the above-described formula (2-4), R⁶=-O-(C₂H₄-O)₅-C₁₃H₂₇, R⁷=C₂H₅-O-, R⁸=-O-(C₂H₄-O)₅-C₁₃H₂₇, and R⁹=-C₃H₆-)) manufactured by Evonik Degussa GmbH 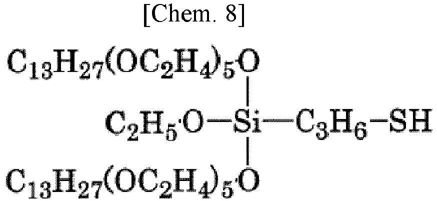 Sulfide-based silane coupling agent: Si69 (bis(3-triethoxysilylpropyl)tetrasulfide) manufactured by Degussa
Anti-aging agent 6C: NOCRAC 6C (N-(1,3-dimethylbutyl)-N'-phenyl-p-phenylenediamine) manufactured by OUCHI SHINKO CHEMICAL INDUSTRIAL CO., LTD.
Anti-aging agent RD: NOCRAC RD (poly(2,2,4-trimethyl-1,2-dihydroquinoline)) manufactured by OUCHI SHINKO CHEMICAL INDUSTRIAL CO., LTD.
Zinc oxide: Zinc oxide manufactured by MITSUI MINING & SMELTING CO., LTD.
Sulfur: HK-200-5 (5%-oil sulfur) manufactured by Hosoi Chemical Industry Co., Ltd.
Vulcanization accelerator CZ: NOCCELER CZ (N-cyclohexyl-2-benzothiazolylsulfenamide) manufactured by OUCHI SHINKO CHEMICAL INDUSTRIAL CO., LTD.
Vulcanization accelerator TBzTD: NOCCELER TBzTD (tetrabenzylthiuram disulfide) manufactured by OUCHI SHINKO CHEMICAL INDUSTRIAL CO., LTD.
N-phenyl-N-(trichloromethylsulfenyl)benzyl sulfenamide: Vulkalent E/C of LANXESS

### (Production Example 1)

Two autoclaves with an internal volume of 10 liters each having an inlet in the bottom thereof and an outlet in the top thereof and each provided with an agitator and a jacket, were serially connected to each other as reactors. Butadiene, styrene, and cyclohexane were mixed with one another in respective predetermined proportions. The solution obtained by the mixing was caused to flow via a dehydration column filled with activated alumina, and n-butyllithium was mixed with the solution in a static mixer in order to remove impurities from the solution. Then, the solution was continuously supplied from the bottom of the first reactor. Furthermore, 2,2-bis(2-oxolanyl)propane as a polar compound and n-butyllithium as a polymerization initiator were each continuously supplied from the bottom of the first reactor at a predetermined speed, with the internal temperature of the reactor being kept at 95°C. The resultant polymer solution was continuously drawn out of the top of the reactor and supplied to the second reactor. While the temperature of the second reactor was kept at 95°C, a mixture (hereinafter, referred to as "modifier A"), of tetraglycidyl-1,3-bisaminomethylcyclohexane (monomer) and an oligomer component, having been diluted with cyclohexane to become a 1000-fold diluted liquid was continuously added as a modifier to the polymer solution at a predetermined speed so that a modification reaction occurred. The resultant polymer solution was continuously drawn out of the reactor, and an antioxidant was continuously added to the polymer solution in a static mixer. Moreover, an extender oil NC140 manufactured by Japan Energy Corporation was added to and mixed with the polymer solution such that the amount of the extender oil NC140 became 25 parts by mass per 100 parts by mass of the polymer. Thereafter, the solvent was removed from the polymer solution, thereby obtaining a target oil-extended and modified diene-based polymer.

### <Examples and Comparative Examples>

According to each of blending formulas indicated in the tables, the materials other than the sulfur and the vulcanization accelerator were kneaded for five minutes under the condition of 150°C with use of a 1.7-L Banbury mixer manufactured by Kobe Steel, Ltd., to obtain a kneaded product. Then, the sulfur and the vulcanization accelerator were added to the obtained kneaded product, and the mixture was kneaded for five minutes under the condition of 80°C with use of an open roll, to obtain an unvulcanized rubber composition.

The obtained unvulcanized rubber composition was press-vulcanized for 12 minutes at 170°C with use of a mold having a thickness of 0.5 mm, thereby obtaining a vulcanized rubber composition.

In addition, the obtained unvulcanized rubber composition was formed into the shape of a cap tread, the cap tread was attached together with other tire members on a tire forming machine, and an unvulcanized tire was formed. The unvulcanized tire was vulcanized for 15 minutes at 170°C, thereby producing a test tire (size: 195/65R15).

The produced vulcanized rubber compositions and the test tires were evaluated regarding the performances thereof according to the following methods. The results are indicated in the tables. Reference comparative examples in Tables 1, 2, 3, 4, 5, 6, and 7 are respectively Comparative Examples 1-1, 2-1, 3-1, 4-1, 5-1, 6-1, and 1-1.

### (Viscoelasticity Test)

The complex elastic modulus E* (MPa) and the loss tangent tan8 of each of the above-described vulcanized rubber sheets were measured with use of a viscoelasticity spectrometer VES manufactured by Iwamoto Seisakusho under the conditions of a measurement temperature of 30°C, an initial strain of 10%, and a dynamic strain of 2%. A higher E* (30°C) indicates a higher rigidity and indicates better steering stability. A smaller tan8 (30°C) indicates that less heat is generated, and indicates better low fuel consumption performance.

### (Wear Resistance)

The test tires were mounted on all wheels of a vehicle (front wheel drive vehicle with an engine displacement of 2000 cc, produced in Japan), and the vehicle was actually caused to run on a test course having a dry asphalt road surface (30°C). The groove depth of a tread portion of each tire after the vehicle run for a distance of 8000 km was measured, and a running distance at which the groove depth of the tire decreased by 1 mm was calculated. The result is indicated as an index with the result of the corresponding reference comparative example being regarded as 100 (wear resistance index). A larger index indicates better wear resistance.

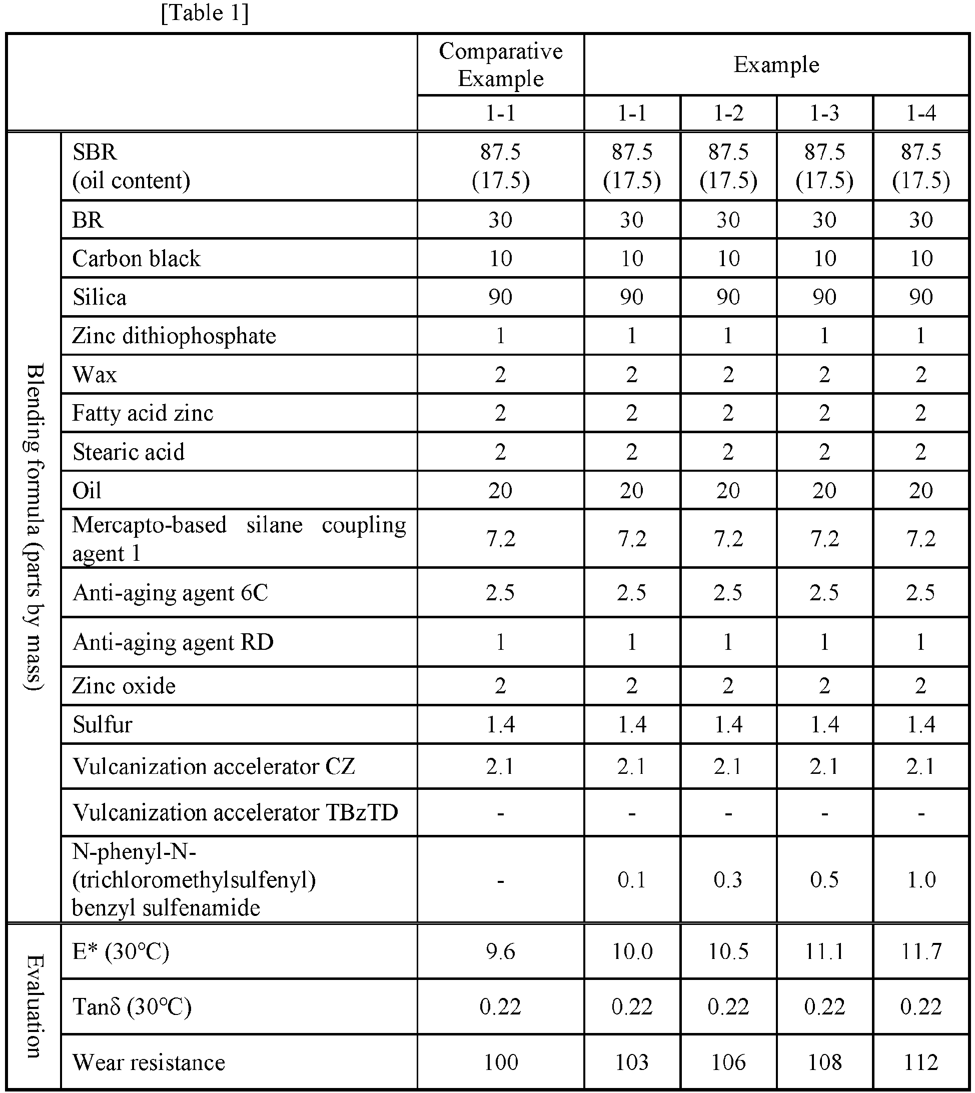

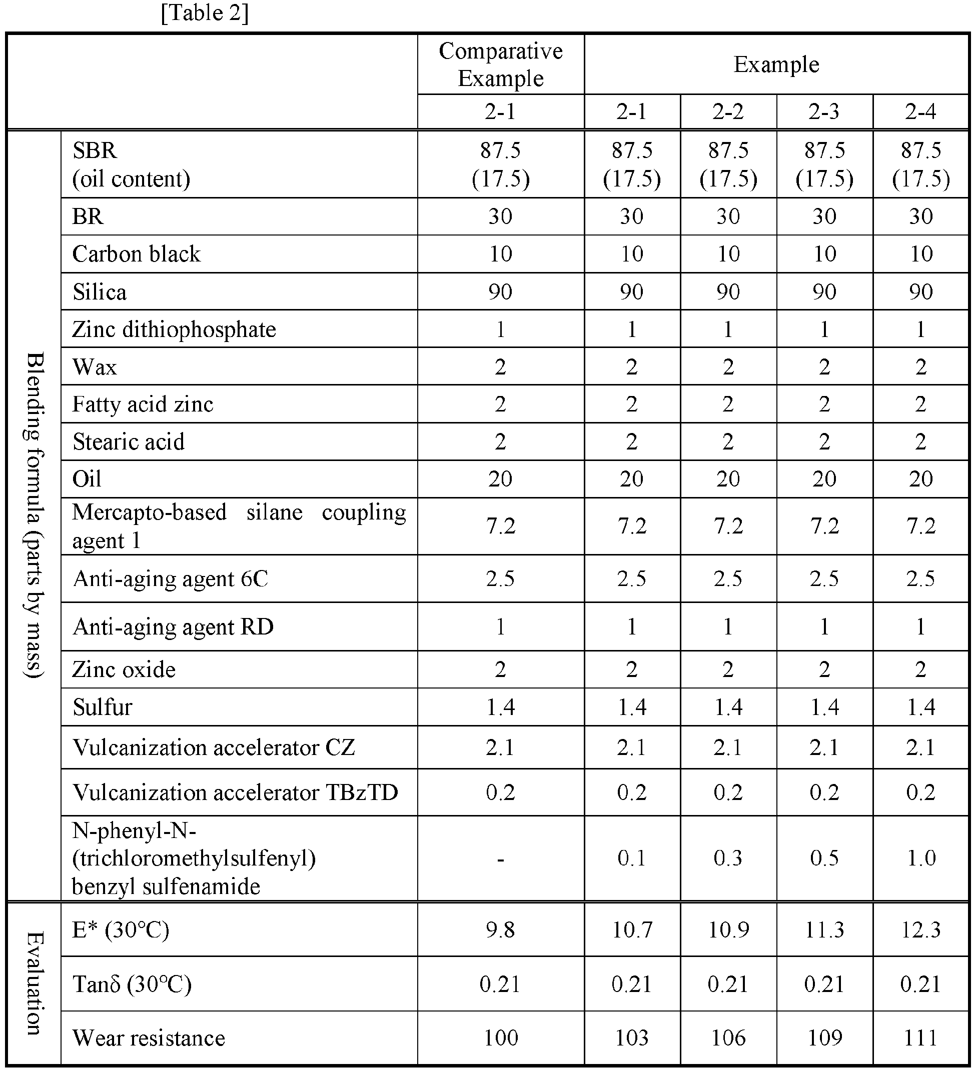

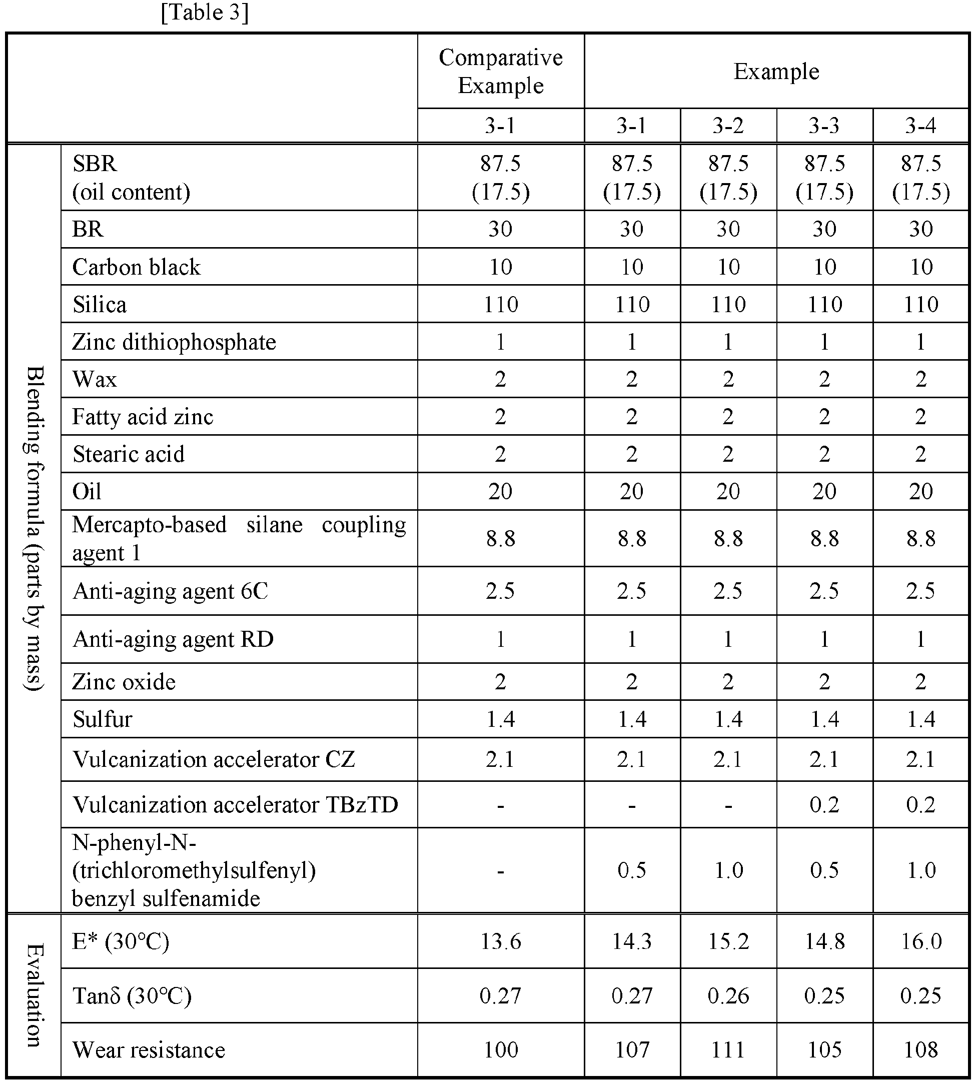

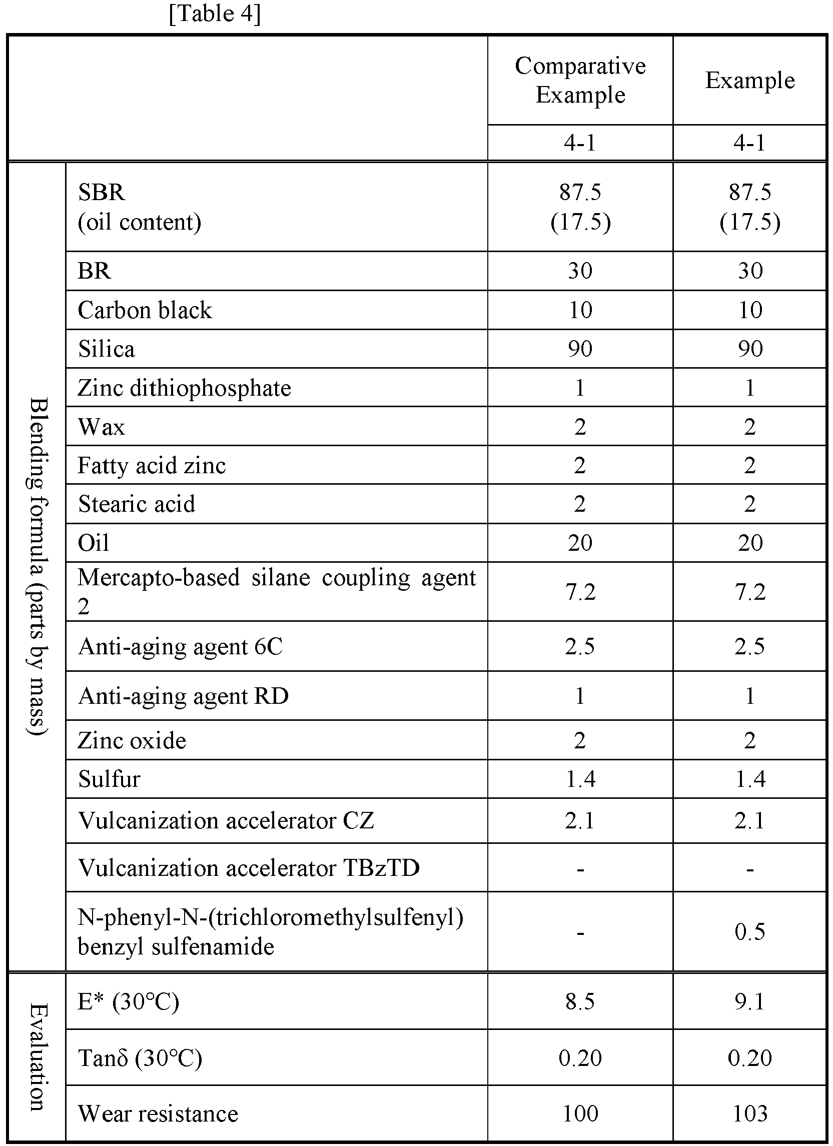

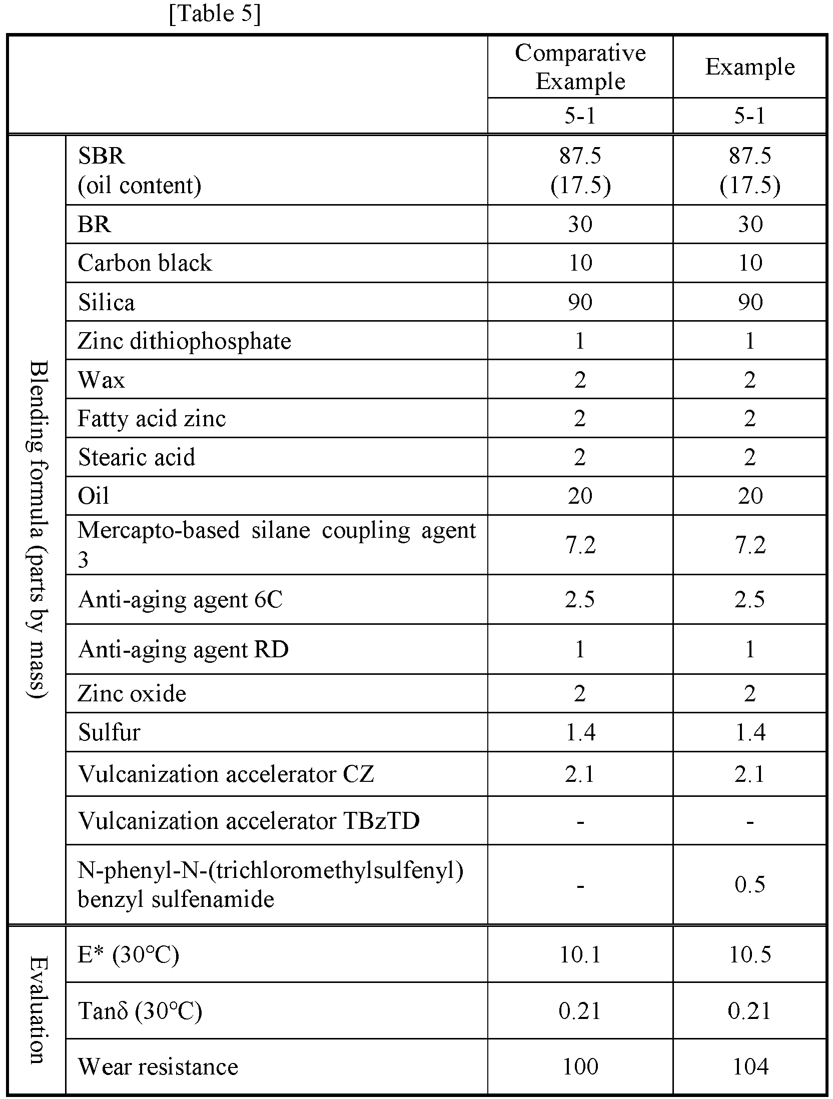

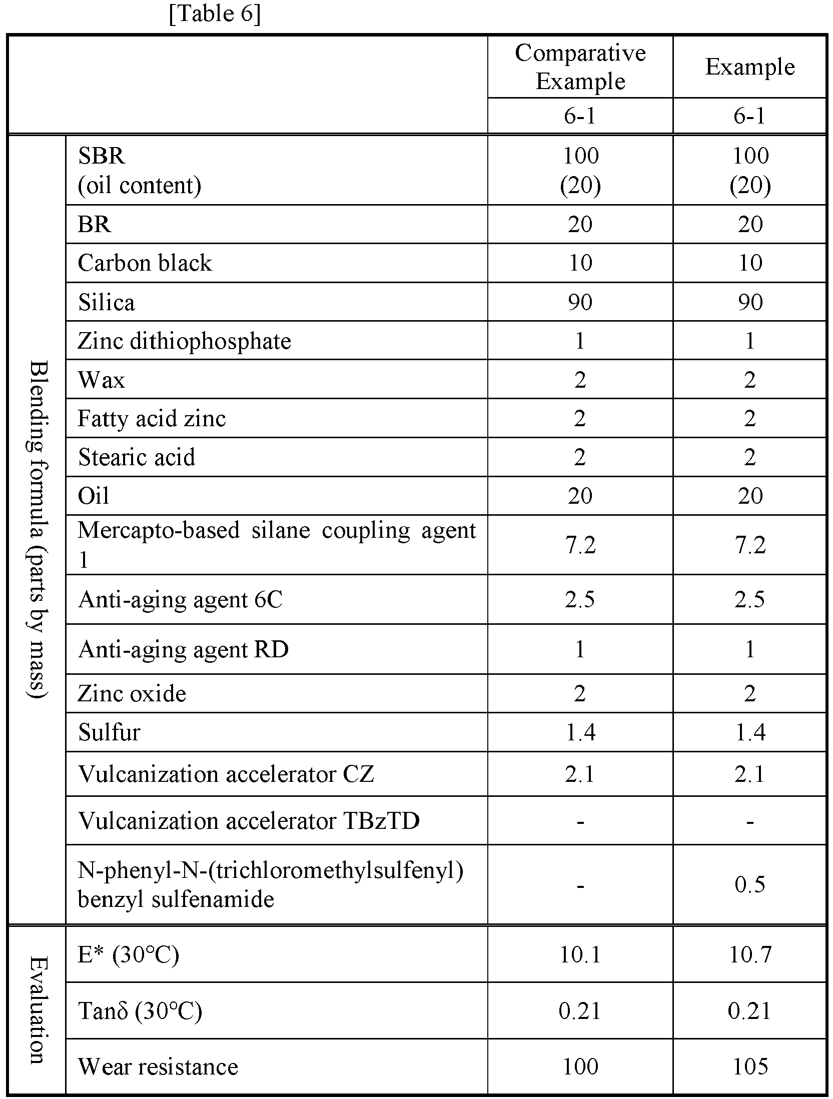

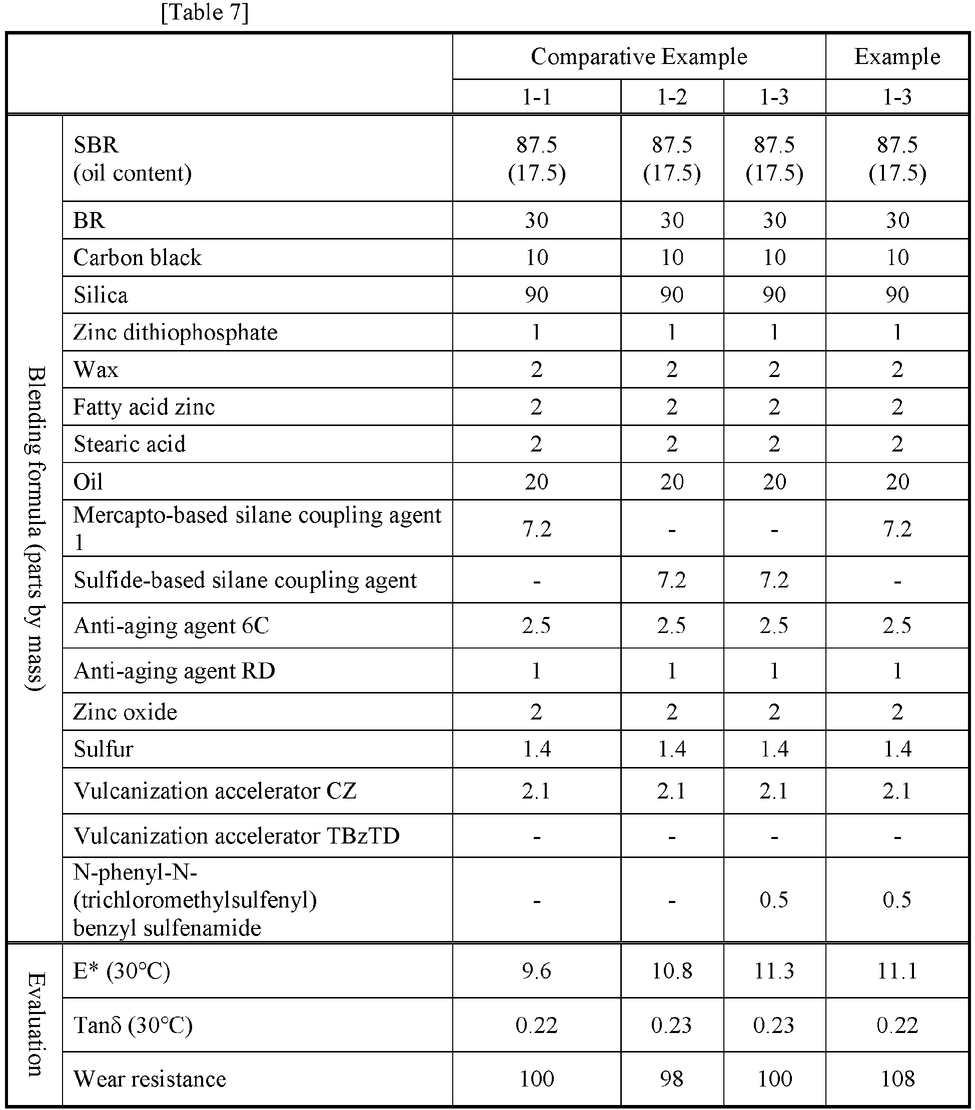

According to the tables, the wear resistance of each example containing the rubber component, the silica, the mercapto-based coupling agent, and N-phenyl-N-(trichloromethylsulfenyl)benzyl sulfenamide is significantly (synergistically) improved while ensuring favorable E* (steering stability) and tan8 (low fuel consumption performance) of the example.

Provided are a rubber composition for a tire, and a tire which have excellent wear resistance. The rubber composition for a tire contains a rubber component, a silica, a mercapto-based coupling agent, and N-phenyl-N-(trichloromethylsulfenyl)benzyl sulfenamide.

## Claims

1. A rubber composition for a tire, the rubber composition containing a rubber component, a silica, a mercapto-based coupling agent, and N-phenyl-N-(trichloromethylsulfenyl)benzyl sulfenamide.

2. The rubber composition for a tire according to claim 1, wherein an amount of a styrene-butadiene rubber contained in 100% by mass of the rubber component is not less than 50% by mass.

3. The rubber composition for a tire according to claim 1 or 2, wherein the rubber composition contains not less than 90 parts by mass of the silica per 100 parts by mass of the rubber component.

4. The rubber composition for a tire according to claim 1 or 2, wherein the rubber composition contains not less than 100 parts by mass of the silica per 100 parts by mass of the rubber component.

5. A tire in which the rubber composition according to any one of claims 1 to 4 is used.
